# EUROPEAN PATENT APPLICATION

(11) **EP 4 354 379 A1**
(43) Date of publication of application: **17.04.2024**
(21) Application number: 22819842.0
(22) Date of filing: 03.03.2022
(51) Int. Cl.: G06Q 30/06, G06Q 50/10

(54) **PROGRAM, INFORMATION PROCESSING DEVICE, AND METHOD**

(30) Priority: 08.06.2021 JP 2021095723
(71) Applicant: Matchbox Technologies, Inc., Niigata-shi, Niigata, 950-0945 (JP)
(72) Inventor: SATO Takashi, Niigata-shi, Niigata 950-0945 (JP)
(74) Representative: AWA Sweden AB
(86) International application number: PCT/JP2022/009012
(87) International publication number: WO 2022/259652

(57) **Abstract**

A server 20 of a job opportunity registrant management system 1 includes, as its functions,: a registration information acceptance module 2033 that accepts registration information for employment for a business operator, and registers a registrant (first registrant) belonging to the business operator, a registrant (second registrant) belonging to a managing entity, and a registrant (third registrant) not belonging to a specific business operator or managing entity, with attributes different from each other; a job offering information acceptance module 2034 that accepts job offering information from the business operator; and a job offering information presentation module 2035 that presents, to the registrant, the job offering information with respect to the attribute of the registrant to whom the job offering information is provided.

## Description

### [TECHNICAL FIELD]

The present disclosure relates to a program, an information processing apparatus, and a method.

### [BACKGROUND ART]

In retail stores, such as supermarkets and convenience stores, and eating and drinking establishments, such as family restaurants and taverns, non-regular employment temporary workers and part-time workers are often employed as staff members. To securely keep such workers, information on job seekers is preliminarily registered, job offering information is distributed to the job seekers when this information is present, and matching with the job offering information is achieved, thus securely keeping the workers.

Patent Literature 1 discloses a recruiting matching system that supports matching between job seekers and an employer (business operator). The recruiting matching system is a system that specifically supports matching about day-labor recruitment, and preliminarily registers information on the job seekers, and allows distribution of job offering information, assistance for selection of appropriate human resources, conclusion of an actual employment contract, and subsequent work by the job seekers, in a short time period.

### [CITATION LIST]

### [PATENT LITERATURE]

[Patent Literature 1] Japanese Patent Laid-Open No. 2017-117375

### [SUMMARY OF INVENTION]

### [TECHNICAL PROBLEM]

Incidentally, retail stores, such as supermarkets and convenience stores, and eating and drinking establishments, such as family restaurants and taverns, as described above, not only have a business configuration that operates multiple stores (that may belong to a single business operator or different business operators), but also have an already typical business configuration that operates various types of stores or shops. It is important for such a business configuration to securely keep labor working in various types of stores or shops, and appropriately provide the labor for stores or shops with labor shortage. It is also important to match skills of job seekers about which business the job seekers have previously been engaged in and which business they can handle, with job offering information.

Accordingly, the present disclosure describes a technique that can securely keep labor working for various business operators, and appropriately provide the labor for stores with labor shortage.

### [SOLUTION TO PROBLEM]

According to an embodiment of the present disclosure, a program is provided that is to be executed by a computer including a processor, and a memory, for managing registrants registered for employment for a business operator. The memory is configured to store attributes of the registrants so as to discriminate a first registrant belonging to the business operator, from a second registrant belonging to a managing entity having a predetermined relationship with the business operator. The program causes the processor to execute: a step of accepting registration information from the registrants, and storing, in the memory, the information, with discrimination with respect to the attributes of the registrants; a step of accepting job offering information from the business operator; and a step of presenting, to the registrants, the job offering information corresponding to the attributes of the registrants, according to a selection operation from the business operator.

According to an embodiment of the present disclosure, an information processing apparatus is provided that includes a control unit, and a storing unit, and manages registrants registered for employment for a business operator. The storing unit is configured to store attributes of the registrants so as to discriminate a first registrant belonging to the business operator, from a second registrant belonging to a managing entity having a predetermined relationship with the business operator. The control unit executes: a step of accepting registration information from the registrants, and storing, in a memory, the information, with discrimination with respect to the attributes of the registrants; a step of accepting job offering information from the business operator; and a step of presenting, to the registrants, the job offering information corresponding to the attributes of the registrants, according to a selection operation from the business operator.

According to an embodiment of the present disclosure, a method is provided that is to be executed by a computer including a processor, and a memory, for managing registrants registered for employment for a business operator. The memory is configured to store attributes of the registrants so as to discriminate a first registrant belonging to the business operator, from a second registrant belonging to a managing entity having a predetermined relationship with the business operator. The method causes the processor to execute: a step of accepting registration information from the registrants, and storing, in the memory, the information, with discrimination with respect to the attributes of the registrants; a step of accepting job offering information from the business operator; and a step of presenting, to the registrants, the job offering information corresponding to the attributes of the registrants, according to a selection operation from the business operator.

### [ADVANTAGEOUS EFFECTS OF INVENTION]

According to the present disclosure, the attributes of the registrants registered for employment for the business operator are stored so as to discriminate the first registrant belonging to the business operator, from the second registrant belonging to the managing entity having the predetermined relationship with the business operator. The registration information from the registrants is accepted and stored with discrimination with respect to the attributes of the registrants. The job offering information corresponding to the attributes of the registrants is presented to the registrants according to the selection operation from the business operator. Accordingly, preliminary registration of the information on the labor employed by various business operators can securely keep the labor, and appropriately provide the labor for the business operators with labor shortage.

### [BRIEF DESCRIPTION OF DRAWINGS]

[Figure 1] Figure 1 shows an overview of a job opportunity registrant management system according to the present disclosure.
[Figure 2] Figure 2 shows an entire configuration of the job opportunity registrant management system 1.
[Figure 3] Figure 3 is a block diagram showing a functional configuration of a terminal apparatus 10 included in the job opportunity registrant management system 1 in an embodiment 1.
[Figure 4] Figure 4 shows a functional configuration of a server 20 included in the job opportunity registrant management system 1 in the embodiment 1.
[Figure 5] Figure 5 shows an example of data structures of a registrant database 2021 and a job offering database 2022 that the server 20 stores.
[Figure 6] Figure 6 shows an example of a data structure of a form sheet database 2023 that the server 20 stores.
[Figure 7] Figure 7 is a flowchart showing an example of a flow of performing a registration process by the job opportunity registrant management system 1 in the embodiment 1.
[Figure 8] Figure 8 is a flowchart showing an example of a flow of performing a job offering information acceptance process by the job opportunity registrant management system 1 in the embodiment 1.
[Figure 9] Figure 9 is a flowchart showing an example of a flow of performing a job seeking intention information acceptance process by the job opportunity registrant management system 1 in the embodiment 1.
[Figure 10] Figure 10 is a flowchart showing an example of a flow of performing a charge information calculation process by the job opportunity registrant management system 1 in the embodiment 1.
[Figure 11] Figure 11 shows a screen example for displaying registration information on a registrant to be displayed on the terminal apparatus 10.
[Figure 12] Figure 12 shows a screen example for receiving job offering information to be displayed on the terminal apparatus 10.
[Figure 13] Figure 13 shows a functional configuration of a server 20 included in a job opportunity registrant management system 1 in an embodiment 2.
[Figure 14] Figure 14 shows a functional configuration of a server 20 included in a job opportunity registrant management system 1 in an embodiment 3.

### [DESCRIPTION OF EMBODIMENTS]

Hereinafter, referring to the drawings, embodiments of the present disclosure are described. In the following description, the same components are assigned the same symbols. The names and functions thereof are the same. Consequently, the detailed description of them are not repeated.

### <Overview>

Hereinafter, a job opportunity registrant management system according to the present disclosure is described. The job opportunity registrant management system according to the present disclosure is a system that preliminarily registers information on job seekers in order to transmit a job seeking intention in response to job offering information, and allows the job seeking intention to be transmitted (application) when job offering information as a job-seeking target is present. For example, the job opportunity registrant management system may provide job offering information on regular employees, temporary workers, and part-timers who are assumed to be engaged in long-term employment, or provide job offering information for working hours during which workers, such as temporary workers and part-timers in retail stores, who are assumed to be engaged in short-term (one-shot) employment work, i.e., what is called shift-based job offering information. Alternatively, the system may accept a desired shift, and allow a business operator or a managing entity to adjust the shift. The job opportunity registrant management system according to the present disclosure is a system provided as a web service, i.e., what is called SaaS (Software as a Service), by, e.g., a cloud server or the like, and is configured to allow users that are registrants registered for employment for the business operator or the business operator to access the system through predetermined authentication.

The users using the job opportunity registrant management system according to the present disclosure are not only the business operator, such as a retail store accepting job seekers, but also a managing entity having a predetermined relationship with the business operator. Here, the business operator is, for example, a manager of a shop, such as a retail store or an eating and drinking establishment, a person who is an employee of a company operating a store, such as a retail store or an eating and drinking establishment, and operates the store, or may be an owner business operator running a franchise chain business. The managing entity is an entity that provides a service of providing human resources for a company operating one or more shops, such as retail stores or eating and drinking establishments, and for shops, such as retail stores and eating and drinking establishments, or may be a company running a franchise chain business, or an organization of people having specific qualifications or skills. Note that the managing entity may be a company operating one or more types of shops (with different business categories), such as retail stores and eating and drinking establishments.

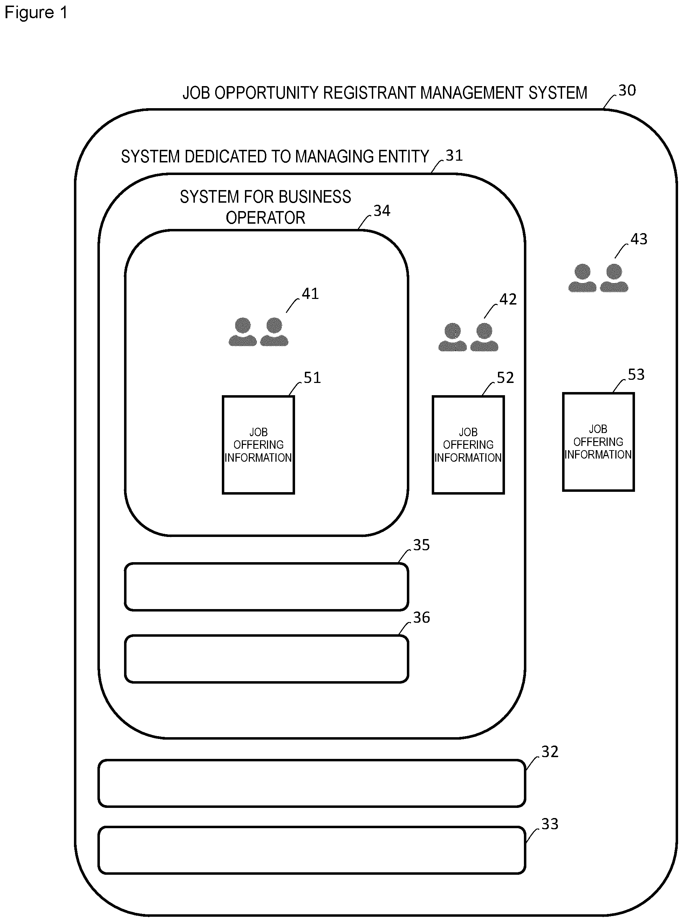

Figure 1 shows an overview of the job opportunity registrant management system according to the present disclosure. A job opportunity registrant management system 30 depicted in Figure 1 schematically illustrates functions of this job opportunity registrant management system, and includes systems 31, 32, and 33 dedicated to managing entities, and systems 34, 35, and 36 for business operators. The systems 34, 35, and 36 for business operators (hereinafter, sometimes collectively called "system 34 for the business operator") are, for example, systems for business operators that are managers or administrators (employees of a company) of shops, such as retail stores and eating and drinking establishments, as described above. Registrants 41 (first registrants) are registered as job seekers by the business operator. The systems are configured to present job offering information 51 for the registrants 41 in a viewable manner. Here, the registrants 41 are not only employees (internal employees) employed by the business operator, but also former internal employees employed on a regular basis by the business operator in the past but resigned and called resigned employees, and people having been employed on a short-term basis (for example, only one day is allowed), who are registered as external experienced workers. Furthermore, information on people who are registered for employment for the business operator but have not actually worked yet is also registered as information on external workers. Note that when the registrant 41 is employed by the business operator, the system 34 for the business operator may generate charge information for payment of a predetermined fee for the business operator as the employer.

The systems 31, 32, and 33 dedicated to managing entities (hereinafter, sometimes collectively called "system 31 dedicated to the managing entity" are, for example, systems for managing entities that are companies operating one or more shops, such as retail stores and eating and drinking establishments, as described above. Registrants 42 (second registrants) are registered as job seekers by the managing entity. The systems are configured to present job offering information 52 for the registrants 42 in a viewable manner. Here, the registrants 42 are people registered in response to application for the job offering information or the like by the managing entity, and do not belong to a specific business operator, and allow application with a job seeking intention for the job offering information 52. The job offering information 52 is configured to be viewable not only for the registrants 42 but also for the registrants 41. Furthermore, the systems 31, 32, and 33 dedicated to managing entities may be configured to involve the multiple systems 34, 35, and 36 for business operators. To present the job offering information for recruiting workers at the store of the business operator using the system 34 for the business operator, this system may post this information in the job offering information 51 for the registrants 41, or in the job offering information 52 for the registrants 42. Here, the business operator can achieve control such that when the business operator wishes to hire workers applied for its job offering information only from among the registrants 41, the business operator posts the information in the job offering information 51, and when the business operator wishes to hire workers from among prospect workers also including the registrants 42, the business operator posts the information in the job offering information 52. Note that when the registrant 42 is employed by the business operator using the system 34 for the business operator, the systems 31, 32, and 33 dedicated to managing entities may generate charge refund information for payment of a predetermined fee to the business operator as the employer.

The job opportunity registrant management system 30 is a system that involves one or more systems 31, 32, and 33 dedicated to managing entities. Registrants 43 are registered as job seekers by an administrator of this system. The system 30 is configured to present job offering information 53 for the registrants 43 (third registrants) in a viewable manner. Here, the registrants 43 are people registered in response to application for the job offering information or the like from the administrator of this system, and do not belong to a specific business operator or managing entity, and allow application with a job seeking intention for the job offering information 53. The job offering information 53 is configured to be viewable not only for the registrants 43 but also for the registrants 41 or the registrants 42. Furthermore, to present the job offering information for recruiting workers at the store of the business operator using the system 34 for the business operator, the job opportunity registrant management system 30 may post this information in the job offering information 51 for the registrants 41, in the job offering information 52 for the registrants 42, or in the job offering information 53 for the registrants 43. Accordingly, the business operator can achieve control such that when the business operator wishes to hire workers from among prospect workers also including the registrants 43, the business operator posts the information in the job offering information 53. Note that when the registrant 43 is employed by the business operator using the system 34 for the business operator, the job opportunity registrant management system 30 may generate charge refund information for payment of a predetermined fee to the business operator as the employer.

Note that the systems 34, 35, and 36 for business operators may be involved in the multiple systems 31, 32, and 33 dedicated to managing entities, and be configured to allow the registrants 41 to view multiple pieces of job offering information 52. The registrants 41, 42, and 43 may be registered in databases physically different from each other and be managed, or be registered in a physically identical database and managed according to access control as to which the access is originated from among the job opportunity registrant management system 30, the system 31 dedicated to the managing entity, and the system 34 for the business operator. The browsable range of pieces of job offering information 51, 52, and 53 may be controlled by, for example, assigning the registrants 41, 42, and 43 access privileges having respective browsable ranges.

According to such a configuration, the business operator using the system 34 for the business operator can use not only the own job offering information 51, but also the job offering information 52 or the job offering information 53, and can thus employ job seekers for the job offering information 52 or the job offering information 53. Accordingly, various types of labor can be securely kept, and the labor can be appropriately provided for the business operators with labor shortage.

### <First Embodiment>

Hereinafter, a job opportunity registrant management system 1 is described. In the following description, for example, access from a terminal apparatus 10 to a server 20 makes the server 20 reply with information for allowing the terminal apparatus 10 to generate a screen. The terminal apparatus 10 generates the screen, based on the information received from the server 20, and displays the screen.

### <1 Entire Configuration of Job Opportunity Registrant Management System 1>

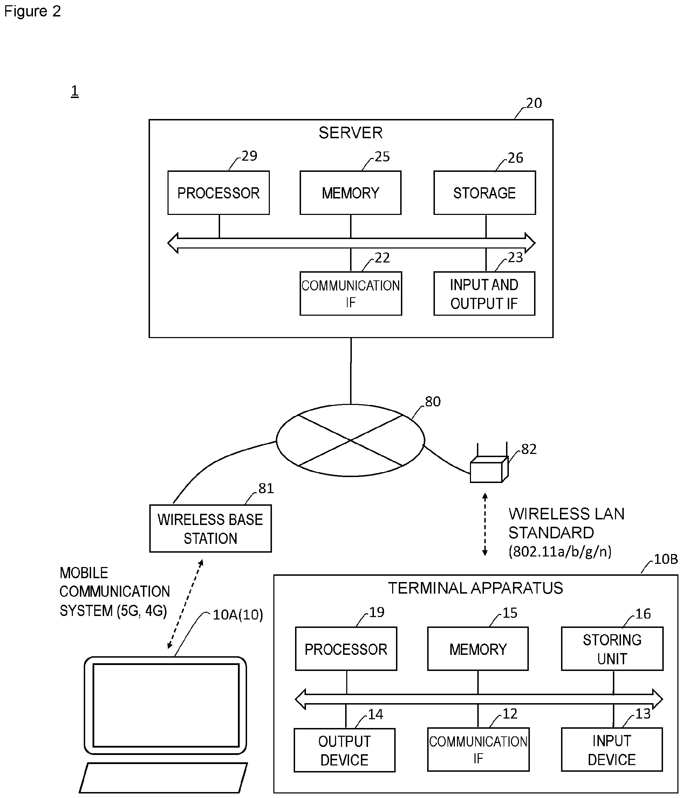

Figure 2 shows an entire configuration of the job opportunity registrant management system 1. As shown in Figure 2, the job opportunity registrant management system 1 includes a plurality of terminal apparatuses (Figure 2 shows a terminal apparatus 10A, and a terminal apparatus 10B; hereinafter, sometimes collectively called "terminal apparatus 10"), and the server 20. The terminal apparatuses 10, and the server 20 are communicably connected to each other via a network 80. The network 80 is made up of a wired or wireless network.

The terminal apparatuses 10 are apparatuses operated by respective users. Here, the users are people who use the respective terminal apparatuses 10, and perform functions of the job opportunity registrant management system 1 that are registration for job seeking, and presentation of job offering information, and for example, the registrants 41, 42, and 43 (including people having an intention for registration), the business operator using the system 34 for the business operator, the managing entity using the system 31 dedicated to the managing entity, or the like. The terminal apparatus 10 is achieved by a stationary personal computer (PC), a laptop PC or the like. Alternatively, the terminal apparatus 10 may be, for example, a tablet or a mobile terminal, such as a smartphone in conformity with a mobile communication system.

The terminal apparatuses 10 are communicably connected to the server 20 via the network 80. The terminal apparatus 10 is connected to the network 80 by communicating with a wireless base station 81 conforming to a communication standard, such as of 4G, 5G, or long term evolution (LTE), or with a communication device, such as a wireless LAN router 82 conforming to a wireless local area network (LAN) standard, such as the Institute of Electrical and Electronics Engineers (IEEE) 802.11. As shown in Figure 2 as the terminal apparatus 10B, the terminal apparatus 10 includes a communication interface (IF) 12, an input device 13, an output device 14, a memory 15, a storing unit 16, and a processor 19.

The communication IF 12 is an interface for receiving and outputting signals for allowing the terminal apparatus 10 to communicate with external apparatuses. The input device 13 is an input device for accepting an input operation from the user (e.g., a keyboard, a touch panel, a touch pad, or a pointing device such as a mouse, etc.). The output device 14 is an output device for presenting information to the user (a display, a speaker, etc.). The memory 15 is for temporarily storing a program, and data or the like to be processed by the program or the like, and is a volatile memory, such as a dynamic random access memory (DRAM), for example. The storing unit 16 is a storage device for storing data, and is, for example, a flash memory, or a hard disc drive (HDD). The processor 19 is hardware for executing an instruction set described in a program, and includes a computational device, a register, peripheral circuits and the like.

The server 20 is an apparatus that manages information about registrants registered as job seekers by the business operator, information about registrants registered as job seekers by the managing entity, and the like. The server 20 accepts registration information from the user as the job seeker, and registers them as a registrant. The server 20 accepts job offering information from the user as the business operator, registers the information, and presents the job offering information in accordance with an attribute of the registrant. The server 20 presents job seeking intentions for the job offering information, to the business operator, accepts selection of the job seeker, and notifies the selected job seeker.

The server 20 is a computer connected to the network 80. The server 20 includes a communication IF 22, an input and output IF 23, a memory 25, a storage 26, and a processor 29.

The communication IF 22 is an interface for receiving and outputting signals for allowing the server 20 to communicate with external apparatuses. The input and output IF 23 functions as an interface with the input device for accepting an input operation from the user, and the output device for presenting information to the user. The memory 25 is for temporarily storing a program, and data to be processed by the program or the like, and is a volatile memory, such as a dynamic random access memory (DRAM), for example. The storage 26 is a storage device for storing data, and is, for example, a flash memory, or a hard disc drive (HDD). The processor 29 is hardware for executing an instruction set described in a program, and includes a computational device, a register, and peripheral circuits.

### <1.1 Configuration of Terminal Apparatus 10>

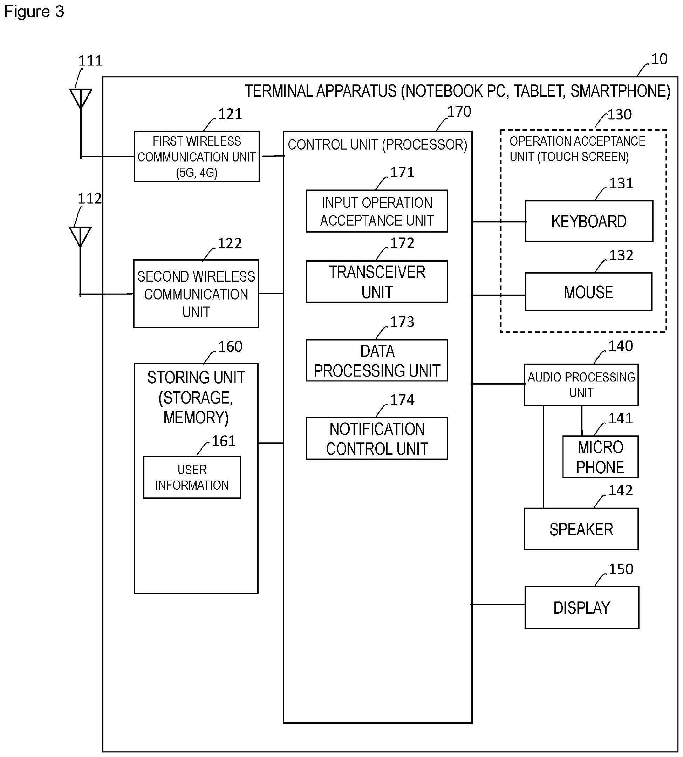

Figure 3 is a block diagram showing a functional configuration of the terminal apparatus 10 included in the job opportunity registrant management system 1 in an embodiment 1. As shown in Figure 3, the terminal apparatus 10 includes a plurality of antennas (an antenna 111, and an antenna 112), a wireless communication unit (a first wireless communication unit 121, and a second wireless communication unit 122) supporting the respective antennas, an operation acceptance unit 130 (including a keyboard 131, and a mouse 132), an audio processing unit 140, a microphone 141, a speaker 142, a display 150, a storing unit 160, and a control unit 170. The terminal apparatus 10 also has functions and components not specifically shown in Figure 3 (for example, a battery for holding power, a power supply circuit controlling supply from the battery to the circuits, etc.). As shown in Figure 3, blocks included in the terminal apparatus 10 are electrically connected to each other via a bus or the like.

The antenna 111 radiates a signal emitted by the terminal apparatus 10, as radio waves. The antenna 111 receives radio waves from the air, and supplies the received signal to the first wireless communication unit 121.

The antenna 112 radiates a signal emitted by the terminal apparatus 10, as radio waves. The antenna 112 receives radio waves from the air, and supplies the received signal to the second wireless communication unit 122.

To allow the terminal apparatus 10 to communicate with another wireless apparatus, the first wireless communication unit 121 performs modulation and demodulation processes and the like for transmitting and receiving signals via the antenna 111. To allow the terminal apparatus 10 to communicate with another wireless apparatus, the second wireless communication unit 122 performs modulation and demodulation processes and the like for transmitting and receiving signals via the antenna 112. The first wireless communication unit 121, and the second wireless communication unit 122 are communication modules that include a tuner, a received signal strength indicator (RSSI) calculation circuit, a cyclic redundancy check (CRC) calculation circuit, and a high-frequency circuit. The first wireless communication unit 121, and the second wireless communication unit 122 apply modulation and demodulation, and frequency conversion to wireless signals transmitted and received by the terminal apparatus 10, and supplies the received signal to the control unit 170.

The operation acceptance unit 130 has a mechanism for accepting input operation by the user. Specifically, the operation acceptance unit 130 includes the keyboard 131, and the mouse 132. Note that the operation acceptance unit 130 may be configured as a touch screen that adopts, for example, a capacitive touch panel, and thus detects a position where the user is in contact with the touch panel.

The keyboard 131 accepts an input operation by the user of the terminal apparatus 10. The keyboard 131 is a device for receiving character input, and outputs, to the control unit 170, input character information as an input signal.

The mouse 132 accepts an input operation by the user of the terminal apparatus 10. The mouse 132 is a pointing device for selecting an object displayed on the display 150 and performing other operations, and outputs, to the control unit 170, position information on selection on the screen, and information indicating that a button is pressed, as an input signal.

The audio processing unit 140 modulates and demodulates an audio signal. The audio processing unit 140 modulates a signal supplied by the microphone 141, and supplies the modulated signal to the control unit 170. The audio processing unit 140 supplies the audio signal to the speaker 142. The audio processing unit 140 is achieved by, for example, a processor for audio processing. The microphone 141 accepts an audio input, and supplies an audio signal corresponding to the audio input, to the audio processing unit 140. The speaker 142 converts the audio signal supplied from the audio processing unit 140, into a sound, and outputs the sound to the outside of the terminal apparatus 10.

The display 150 displays data on an image, a video, text and the like according the control by the control unit 170. The display 150 is achieved by, for example, a liquid crystal display (LCD), or an organic electroluminescence (EL) display.

The storing unit 160 includes, for example, a flash memory or the like, and stores data and a program used by the terminal apparatus 10. On a certain aspect, the storing unit 160 stores user information 161.

The user information 161 is user information for using the terminal apparatus 10 to perform functions of the job opportunity registrant management system 1 that are registration for a job seeking intention, presentation of job offering information, etc. The user information includes information for identifying the user (user ID), a name of the user, and organization information on a corporation and the like to which the user belongs.

The control unit 170 reads the program stored in the storing unit 160, and executes instructions included in the program, thus controlling the operation of the terminal apparatus 10. The control unit 170 is an application preliminarily installed in the terminal apparatus 10, for example. The control unit 170 operates according to the program, thus exerting functions as those of an input operation acceptance unit 171, a transceiver unit 172, a data processing unit 173, and a notification control unit 174.

The input operation acceptance unit 171 performs a process of accepting an input operation by the user on the input device, such as the keyboard 131.

The transceiver unit 172 performs a process of allowing the terminal apparatus 10 to transmit and receive data to and from the external apparatus, such as the server 20, in conformity with the communication protocol.

The data processing unit 173 performs a process of computing the data accepted as an input by the terminal apparatus 10, according to the program, and outputting a computational result to the memory or the like.

The notification control unit 174 performs a process of presenting information to the user. The notification control unit 174 performs a process of causing the display 150 to display a display image, a process of causing the speaker 142 to output a sound, and the like.

### <1.2 Functional Configuration of Server 20>

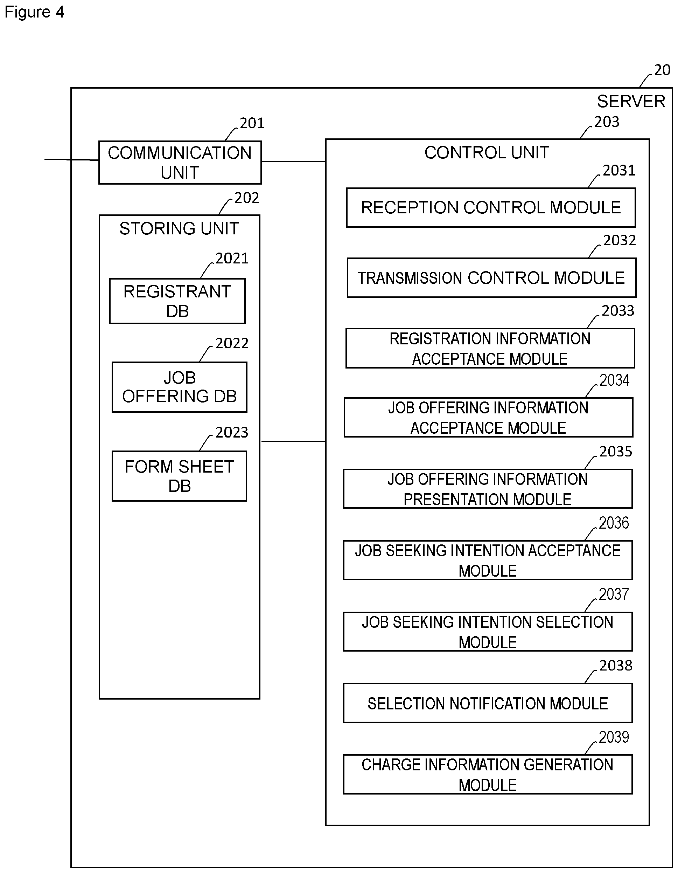

Figure 4 shows a functional configuration of the server 20 included in the job opportunity registrant management system 1 in the embodiment 1. As shown in Figure 4, the server 20 exerts functions as those of a communication unit 201, a storing unit 202, and a control unit 203.

The communication unit 201 performs a process of allowing the server 20 to communicate with the external apparatus.

The storing unit 202 stores data and programs used by the server 20. The storing unit 202 stores a registrant database 2021, a job offering database 2022, a form sheet database 2023, etc.

The registrant database 2021 is a database for holding information on registrants registered for achieving job seeking intentions in the job opportunity registrant management system 1, and is configured to register the registrant 41 (first registrant), the registrant 42 (second registrant), and the registrant 43 (third registrant) described above so as to be discriminated from each other. Details are described later.

The job offering database 2022 is a database for holding job offering information registered by the business operator using the job opportunity registrant management system 1, specifically, job offering information assuming a long-term employment, information on shifts assuming a short-term employment, etc. Details are described later.

The form sheet database 2023 is a database for holding information about form sheets and the like that are required for employment, and are issued by the job opportunity registrant management system 1 when the registrant is employed. Details are described later.

The processor 29 of the server 20 performs the processes according to the program, thus allowing the control unit 203 to exert functions described as those of various modules that are a reception control module 2031, a transmission control module 2032, a registration information acceptance module 2033, a job seeking intention acceptance module 2034, a job offering information presentation module 2035, a job seeking intention acceptance module 2036, a job seeking intention selection module 2037, a selection notification module 2038, and a charge information generation module 2039.

The reception control module 2031 controls a process of allowing the server 20 to receive a signal from the external apparatus in conformity with the communication protocol.

The transmission control module 2032 controls a process of allowing the server 20 to transmit a signal to the external apparatus in conformity with the communication protocol.

Since a person who wishes to be employed and is a user using the job opportunity registrant management system 1 operates the terminal apparatus 10 and inputs registration information in order to register themself as a registrant for employment for the business operator, the registration information acceptance module 2033 controls a process of accepting the registration information from the terminal apparatus 10 accordingly. For example, when registration information is input based on job offering information or information for prompting registration (for example, a link to a registration screen) from the manager of a shop, such as a retail store or an eating and drinking establishment, or the business operator that is the administrator, the registration information acceptance module 2033 accepts the registration information as that on the registrant (first registrant) belonging to the business operator. The registration information may be accepted, for example, through introduction from another registrant (who may be an internal employee, an external experienced worker, or an external worker) already registered as a registrant belonging to the business operator; in this case, information on the registrant having introduced them may also be accepted.

For example, when registration information is input based on job offering information or information for prompting registration (for example, a link to the registration screen) from a managing entity that is a company operating one or more shops, such as retail stores and eating and drinking establishments, or a managing entity that is a company running a franchise chain business, the registration information acceptance module 2033 accepts the registration information as that on the registrant (second registrant) belonging to the managing entity. The registration information on the registrant may be accepted, for example, through introduction from another registrant already registered as a registrant belonging to the managing entity; in this case, information on the registrant having introduced them may also be accepted.

Furthermore, when registration information is input based on job offering information or information for prompting registration (for example, a link to the registration screen) from the administrator of the job opportunity registrant management system 1, the registration information acceptance module 2033 accepts the registration information as that on the registrant (third registrant) not belonging to a specific business operator or managing entity. The registration information on the registrant may be accepted, for example, through introduction from another registrant already registered as the registrant; in this case, information on the registrant having introduced them may also be accepted.

When the registration information acceptance module 2033 accepts registration information from the registrant (first registrant) belonging to the business operator, the registrant (second registrant) belonging to the managing entity, and the registrant (third registrant) not belonging to a specific business operator or managing entity, the registration information acceptance module 2033 registers the registrants as those having attributes different from each other, for example, and stores and holds the information in the registrant database 2021. When the registration information acceptance module 2033 accepts the registration information from the registrants (first registrants) belonging to the business operator, the registration information acceptance module 2033 registers the registrants as those having attributes different from each other with respect to them being the internal employee, the external experienced worker, or the external worker. In this case, the registration information acceptance module 2033 accepts information on, for example, the name, address, contact, gender, age and the like of the registrant. Furthermore, information on skills based on the previous background of the registrant, or information on qualifications related to the employment is accepted as skill information. Specifically the skill information is information on experience of a specific business (service, cooking experience in an eating and drinking establishment, etc.), or information on qualifications and licenses.

Since the business operator that is a user using the job opportunity registrant management system 1 operates the terminal apparatus 10 and inputs job offering information, the job offering information acceptance module 2034 controls a process of accepting the job offering information from the terminal apparatus 10. The job offering information input by the business operator may be job offering information on regular employees, temporary workers, and part-timers who are assumed to be engaged in long-term employment, job offering information for working hours during which workers, such as temporary workers and part-timers in retail stores, eating and drinking establishments, etc., who are assumed to be engaged in short-term (one-shot) employment work, i.e., what is called shift-based job offering information, or information on additional job offering for shifts with labor shortage. The job offering information acceptance module 2034 accepts, for example, the company name and store name of the business operator, the name of job type and the name of work pertaining to employment, the recruitment number, information on the unit wage for predetermined hours, and the like, as job offering information. For example, in the case of job offering information assuming long-term employment, the job offering information acceptance module 2034 accepts information indicating conditions of available hours, dates, and the number of times in a predetermined period (e.g., four times per week, six or more hours per working time, etc.). In the case of job offering information assuming short-term (one-shot) employment (shifts), the job offering information acceptance module 2034 accepts information indicating scheduled working hours and date.

When the job offering information acceptance module 2034 accepts the job offering information from the business operator, the job offering information acceptance module 2034 accepts information indicating a range of registrants to whom the job offering information is presented to allow them to view the job offering information. The range of registrants to whom the job offering information is presented is information indicating a range where the job offering information is presented with respect to the individual attributes of the registrants, and specifically, is information indicating presentation only to the registrants (first registrants) belonging to the business operator, presentation to the range also including the registrants (second registrants) belonging to the managing entity, or presentation to the range also including the registrants (third registrants) not belonging to a specific business operator or managing entity. The range of registrants is a range which is controlled by the job offering information presentation module 2035, described later, and to which the job offering information is presented. In the case where the range of registrants indicates presentation only to the registrant (first registrant) belonging to the business operator, the range of registrants may include presentation only to the internal employees, or presentation to the internal employees and also to the external experienced workers and the external workers. The job offering information acceptance module 2034 stores and holds the accepted job offering information in the job offering database 2022, for example.

The job offering information presentation module 2035 controls a process of presenting, to the registrant, the job offering information accepted by the job offering information acceptance module 2034, in accordance with the attribute of the registrant to whom the job offering information is presented. As described above, the job offering information presentation module 2035 controls presentation only to the registrants (first registrants) belonging to the business operator, presentation to the range also including the registrants (second registrants) belonging to the managing entity, or presentation to the range also including the registrants (third registrants) not belonging to a specific business operator or managing entity, in accordance with the range of the attributes of registrants to whom the job offering information accepted by the job offering information acceptance module 2034 is presented, and thus performs the presentation to the corresponding registrants. In the case of presentation only to the registrants (first registrants) belonging to the business operator, the job offering information presentation module 2035 controls whether presentation is performed only to the internal employees, or to the internal employees and also to the external experienced workers and the external workers, and thus performs the presentation to the corresponding registrants. Specifically, since the registrant operates the terminal apparatus 10 and views the job offering information, the job offering information presentation module 2035 determines the attribute of the registrant based on the user ID for identifying the registrant, transmits the job offering information corresponding to the attribute of the registrant to the terminal apparatus 10, and causes the terminal apparatus 10 to display the information.

The job offering information presentation module 2035 presents, for example, the company name and store name of the business operator, the name of job type and the name of work pertaining to the employment, the recruitment number, information on the unit wage for predetermined hours, and the like, as job offering information. For example, in the case of job offering information assuming long-term employment, the job offering information presentation module 2035 presents information indicating conditions of available hours, dates, and the number of times in a predetermined period (e.g., four times per week, six or more hours per working time, etc.). In the case of job offering information assuming short-term employment (shifts), the job offering information presentation module 2035 presents information indicating scheduled working hours and date. Furthermore, the job offering information presentation module 2035 causes the terminal apparatus 10 to display, together with the job offering intention, input means (e.g., an application button) for inputting a job seeking intention in response to this job offering information.

Since the registrant that is a user using the job opportunity registrant management system 1 operates the terminal apparatus 10 and inputs the job seeking intention information with a job seeking intention, the job seeking intention acceptance module 2036 controls a process of accepting the job seeking intention information from the terminal apparatus 10. In accordance with the range of attributes of the registrants presented by the job offering information presentation module 2035, the job seeking intention acceptance module 2036 accepts the job seeking intention information from the registrants with the corresponding attributes. The job seeking intention acceptance module 2036 accepts, for example, information that includes the user ID identifying the registrant, the company name and store name of the job-seeking-target business operator, the job-seeking-target job type name and work name, and the employment start date and time and the employment end date and time in the case where the job offering information is job offering information (shifts) assuming a short-term employment, as the job seeking intention information.

In the case where the job offering information is job offering information (shifts) assuming a short-term employment, the job seeking intention acceptance module 2036 may allow designation of intended working hours different from the scheduled working hours in the job offering information. For example, in a case where the information on the scheduled working hours input by the business operator is 9:00 to 18:00, the job seeking intention is typically accepted only if work can be provided over the entire time slot. However, even if work can be allowed only in hours shorter than the time slot, for example, input of 9:00 to 15:00 as intended working hours may be allowed, and the job seeking intention may be allowed to be accepted. The job seeking intention acceptance module 2036 stores and holds the accepted job seeking intention information in the registrant database 2021, for example.

Since the job seeking intention information accepted by the job seeking intention acceptance module 2036 is transmitted to the terminal apparatus 10 of the business operator having input the job offering information, and the terminal apparatus 10 presents the information and then allows the business operator to select the registrant to be actually employed, and input a selection result by operating the terminal apparatus 10, the job seeking intention selection module 2037 controls a process of accepting the selection result, i.e., the information on the registrant to be employed, from the terminal apparatus 10. The job seeking intention selection module 2037 presents, to the business operator, the job seeking intention information with discrimination among the registrants (first registrants) belonging to the business operator, the registrants (second registrants) belonging to the managing entity, and the registrants (third registrants) not belonging to a specific business operator or managing entity, and accepts selection of the registrant to be actually employed. Here, in the case of the registrants (first registrants), the job seeking intention selection module 2037 presents the registrants with discrimination among internal employees, external experienced workers, and external workers, and accepts selection of the registrant to be actually employed.

The job seeking intention selection module 2037 allows selection with temporal adjustment of hours with respect to the intended working hours designated by the registrant. For example, in a case where the intended working hours designated by the registrant are 9:00 to 15:00, and the business operator can accept employment if the working hours are 9:00 to 14:00, the working hours may be changed to 9:00 to 14:00 and input, and selection may be allowed. The job seeking intention selection module 2037 stores and holds status information on selection by the business operator, in the job offering database 2022, for example.

The selection notification module 2038 controls a process of notifying the registrant's terminal apparatus 10 of information about selection by the business operator, with respect to the registrant pertaining to the selected job seeking intention information accepted by the job seeking intention selection module 2037. The selection notification module 2038 allows the information on selection by the business operator to be displayed as a pop-up screen on the terminal apparatus 10, for example.

The selection notification module 2038 controls a process of issuing documents required for employment, e.g., a notice of employment, and an attendance record, to the selected registrant. Since the types of documents required for employment vary according to the individual attributes of the registrants, specifically, classification where the registrant to be actually employed is the registrant (first registrant) belonging to the business operator, the registrant (second registrant) belonging to the managing entity, or the registrant (third registrant) not belonging to a specific business operator or managing entity, and classification where the registrant (first registrant) belonging to the business operator is the internal employee, external experienced worker, or external worker, the selection notification module 2038 issues documents required for employment in accordance with the attribute of the registrant. The selection notification module 2038 registers and stores information on the selection, in the registrant database 2021, for example.

The charge information generation module 2039 controls a process of calculating charge information pertaining to the employment of the selected registrant accepted by the job seeking intention selection module 2037. Here, the charge information pertaining to the employment of the registrant is charge information for payment of a predetermined fee pertaining to use of the job opportunity registrant management system 1 to the business operator as the employer when the registrant is employed by this business operator, and is calculated with discrimination with respect to the attribute of the registrant. For example, in the case of employment of the registrant (second registrant) belonging to the managing entity, charge information more expensive than that in the case of employment of the registrant (first registrant) belonging to the business operator concerned may be calculated. In this case, a predetermined fee for the managing entity, i.e., what is called a kickback, may be calculated as charge refund information.

### <2 Data Structure>

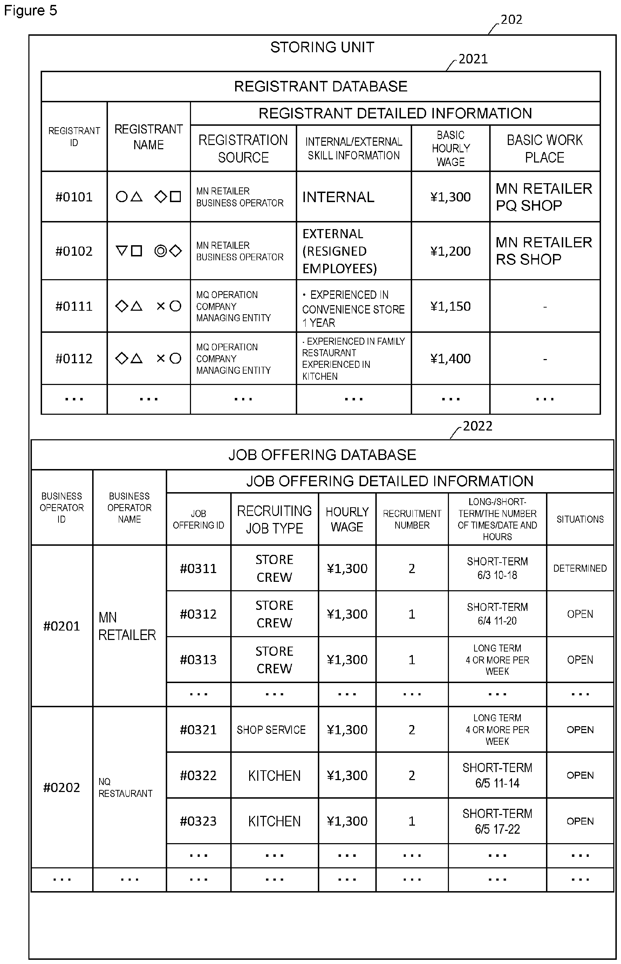

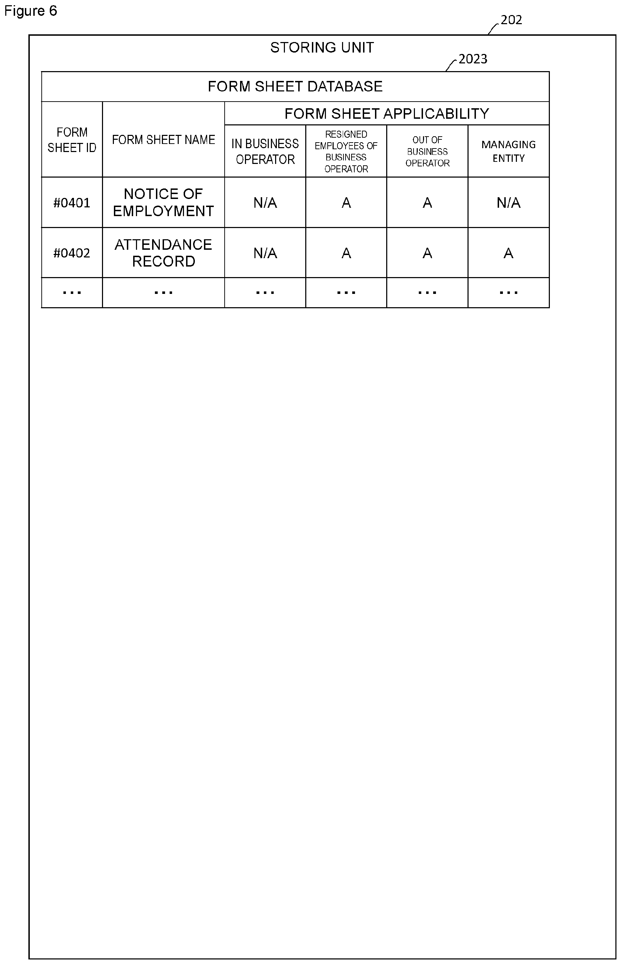

Figure 5 shows an example of data structures of the registrant database 2021 and the job offering database 2022 that the server 20 stores. Figure 6 shows an example of a data structure of the form sheet database 2023 that the server 20 stores.

As shown in Figure 5, records of the registrant database 2021 include an item "REGISTRANT ID", an item "REGISTRANT NAME", and an item "REGISTRANT DETAILED INFORMATION".

The item "REGISTRANT ID" is information that identifies the individual registrant, and is accepted by the job opportunity registrant management system 1 for the sake of the job seeking intention.

The item "REGISTRANT NAME" is the name of the registrant accepted by the job opportunity registrant management system 1 for the sake of the job seeking intention.

The item "REGISTRANT DETAILED INFORMATION" is information about the registrant accepted by the job opportunity registrant management system 1 for the sake of the job seeking intention, and specifically, includes an item "REGISTRATION SOURCE", an item "INTERNAL/EXTERNAL SKILL INFORMATION", an item "BASIC HOURLY WAGE", and an item "BASIC WORK PLACE".

The item "REGISTRANT SOURCE" is information indicating the attribute of the registrant registered by the job opportunity registrant management system 1 for the sake of the job seeking intention. Specifically, information indicating that the registrant is the registrant (first registrant) belonging to the business operator, the registrant (second registrant) belonging to the managing entity, or the registrant (third registrant) not belonging to a specific business operator or managing entity, and information on the business operator or the managing entity are stored.

The item "INTERNAL/EXTERNAL SKILL INFORMATION" stores information indicating that the registrant registered with an intention for employment in the job opportunity registrant management system 1 is an internal employee, an external experienced worker, or an external worker in the case where the registrant is the registrant (first registrant) belonging to the business operator, or the skill information on the registrant in the case where the registrant is the registrant (second registrant) belonging to the managing entity.

The item "BASIC HOURLY WAGE" is information indicating the unit wage for predetermined hours in a case where the registrant registered with an intention for employment in the job opportunity registrant management system 1 is employed, and indicates an hourly wage, as an example. The information on the hourly wage may be, for example, an hourly wage of regular payment from the business operator in the case of the registrant (first registrant) belonging to the business operator, or an hourly wage at the registration or an hourly wage based on previous performance in the case of the registrant (second registrant) belonging to the managing entity or the case of the registrant (third registrant) not belonging to a specific business operator or managing entity.

The item "BASIC WORK PLACE" is information indicating the place of a shop, store or the like at which the registrant registered for the sake of the job seeking intention in the job opportunity registrant management system 1 regularly works.

Although not shown, the registrant database 2021 may hold job seeking intention information transmitted in the past, and information about employment situations.

The registration information acceptance module 2033 of the server 20 accepts the registration information from the user, and adds a record to the registrant database 2021.

Records of the job offering database 2022 include an item "BUSINESS OPERATOR ID", an item "BUSINESS OPERATOR NAME", and an item "JOB OFFERING DETAILED INFORMATION".

The item "BUSINESS OPERATOR ID" is information that identifies the individual business operator that registers the job offering information, in the job opportunity registrant management system 1.

The item "BUSINESS OPERATOR NAME" is information indicating the name of the business operator that registers the job offering information in the job opportunity registrant management system 1, and stores, for example, the name of a shop, the name of an incorporated entity, or the name of a self-employed entity.

The item "JOB OFFERING DETAILED INFORMATION" is information about the job offering information registered in the job opportunity registrant management system 1 by the business operator, and specifically, includes an item "JOB OFFERING ID", an item "RECRUITING JOB TYPE", an item "HOURLY WAGE", an item "RECRUITMENT NUMBER", an item "LONG-/SHORT-TERM, THE NUMBER OF TIMES/DATE AND HOURS", and an item "SITUATIONS". The item "JOB OFFERING DETAILED INFORMATION" is configured so that a record is registered every time the business operator indicated by the item "BUSINESS OPERATOR NAME" registers the job offering information.

The item "JOB OFFERING ID" is information that identifies the individual job offering information registered in the job opportunity registrant management system 1 by the business operator.

The item "RECRUITING JOB TYPE" is information that indicates the job type pertaining to the job offering information registered in the job opportunity registrant management system 1 by the business operator. Specifically, the item indicates work details in a case where employment is actually made in response to this job offering. In the example shown in Figure 5, "STORE CREW" indicating various types of work in a store that is a convenience store, and "STORE SERVICE" indicating service work in a shop that is an eating and drinking establishment are stored.

The item "HOURLY WAGE" is information indicating the unit wage for predetermined hours in a case where employment is actually made in response to the job offering registered in the job opportunity registrant management system 1 by the business operator, and indicates an hourly wage, as an example.

The item "RECRUITMENT NUMBER" is information that indicates the recruitment number of the job offering information registered in the job opportunity registrant management system 1 by the business operator.

The item "LONG-/SHORT-TERM, THE NUMBER OF TIMES/DATE AND HOURS" stores information indicating whether the job offering information registered in the job opportunity registrant management system 1 by the business operator assumes a long-term employment, or a short-term (one-shot) employment, information indicating conditions including the date and hours, and the number of times (e.g., four times per week) in the case where a long-term employment is assumed, and information indicating scheduled working hours and date of a shift in the case where a short-term (one-shot) employment is assumed.

The item "SITUATIONS" is information indicating situations pertaining to the job offering information registered in the job opportunity registrant management system 1 by the business operator, and stores "OPEN" indicating that the job is open, "IN SELECTION" indicating that the offer has been closed, and the registrant is being selected, "DETERMINED" indicating that the registrant to be actually employed has already been determined, and the like.

The job offering information acceptance module 2034 of the server 20 accepts the registration information from the user, and adds a record to the item "JOB OFFERING DETAILED INFORMATION" of the job offering database 2022.

As shown in Figure 6, records of the form sheet database 2023 include an item "FORM SHEET ID", an item "FORM SHEET NAME", and an item "FORM SHEET APPLICABILITY".

The item "FORM SHEET ID" is information that identifies the type of a form sheet issued in the job opportunity registrant management system 1 when the registrant is employed.

The item "FORM SHEET NAME" is information indicating the name of the form sheet issued in the job opportunity registrant management system 1 when the registrant is employed.

The item "FORM SHEET APPLICABILITY" is information indicating whether the form sheet is required to be issued or not when the registrant is actually employed. For example, as shown in Figure 6, "A" indicating that the form sheet is required to be issued, or "N/A" indicating that the form sheet is not required to be issued are stored with respect to a case where an internal employee among the registrants (first registrants) belonging to the business operator is employed, a case where an external experienced worker or an external worker among the registrants (first registrants) belonging to the business operator is employed, and a case where a registrant (second registrant) belonging to the managing entity is employed.

### <3 Operation>

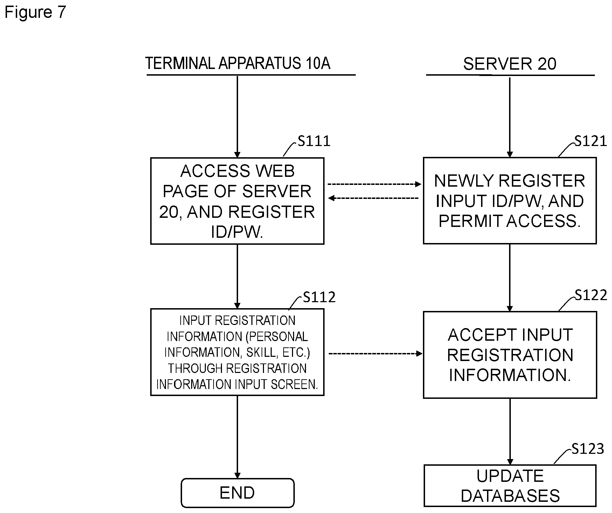

Hereinafter, referring to Figures 7 to 10, a registration process, a job offering information acceptance process, a job seeking intention information acceptance process, and a charge information calculation process by the job opportunity registrant management system 1 according to the first embodiment are described. Note that in Figures 7 to 10, the terminal apparatus used by the registrant is assumed as the terminal apparatus 10A, and the terminal apparatus used by the business operator is assumed as the terminal apparatus 10B.

Figure 7 is a flowchart showing an example of a flow of performing the registration process by the job opportunity registrant management system 1 in the embodiment 1.

In step S111, the input operation acceptance unit 171 of the terminal apparatus 10A accepts operation of inputting the user ID and the password for performing authentication required to use the service of the job opportunity registrant management system 1, from the user intending to register themself as a registrant for employment for the business operator. The transceiver unit 172 transmits the accepted user ID and password, and the user information to the server 20. The transceiver unit 172 of the terminal apparatus 10A accepts information on authentication completion transmitted from the server 20, and display data on a registration information input screen for accepting the registration information. The notification control unit 174 causes the display 150 to display the accepted information on authentication completion, and registration information input screen.

In step S121, the server 20 accepts the user ID and the password transmitted from the terminal apparatus 10A through the communication unit 201, and verifies that the user ID and the password of the user are correct, thus performing predetermined authentication. If the user ID and the password of the user are correct, the server 20 transmits information on authentication completion to the terminal apparatus 10A via the communication unit 201. The registration information acceptance module 2033 of the server 20 transmits display data on the registration information input screen for accepting the registration information, to the terminal apparatus 10A through the communication unit 201.

In step S112, through operation by the user, the input operation acceptance unit 171 of the terminal apparatus 10A accepts input of registration information that the user registers, specifically, personal information, and skill information on the registrant, etc. The transceiver unit 172 transmits the accepted registration information to the server 20.

In step S122, the registration information acceptance module 2033 of the server 20 accepts, via the communication unit 201, the registration information transmitted from the terminal apparatus 10A. Based on information on a registration position (e.g., a link to the registration screen), the registration information acceptance module 2033 determines that the accepted registration information is any of the registrant (first registrant) belonging to the business operator, the registrant (second registrant) belonging to the managing entity, and the registrant (third registrant) not belonging to a specific business operator or managing entity, and discriminates the individual registrants with different attributes. When the registration information acceptance module 2033 accepts the registration information from the registrants (first registrants) belonging to the business operator, the registration information acceptance module 2033 discriminates the registrants as those having attributes different from each other with respect to the registrants being the internal employee, the external experienced worker, or the external worker.

In step S123, the registration information acceptance module 2033 of the server 20 stores the registration information accepted in step S122 in the registrant database 2021, with the information being discriminated as described above.

As described above, when the job opportunity registrant management system 1 accepts the registration information from the users intending to register themselves as registrants for employment for the business operator, the job opportunity registrant management system 1 registers the registrants with attributes being discriminated as those having different attributes.

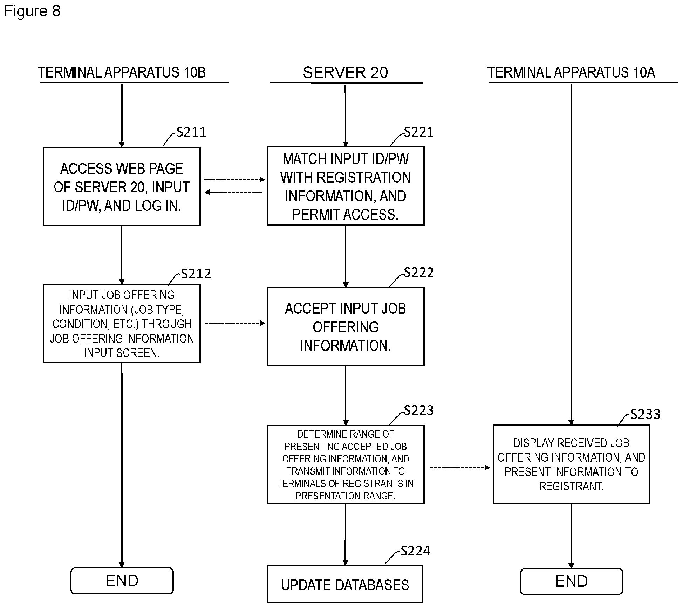

Figure 8 is a flowchart showing an example of a flow of performing the job offering information acceptance process by the job opportunity registrant management system 1 in the embodiment 1.

In step S211, the input operation acceptance unit 171 of the terminal apparatus 10B accepts operation of inputting the user ID and the password for performing authentication required to use the service of the job opportunity registrant management system 1, from the user that is the business operator intending to register job offering information. The transceiver unit 172 transmits the accepted user ID and password, and the user information to the server 20. The transceiver unit 172 of the terminal apparatus 10B accepts information on authentication completion transmitted from the server 20, and display data on a job offering information input screen for accepting the job offering information. The notification control unit 174 causes the display 150 to display the accepted information on authentication completion, and job offering information input screen.

In step S221, the server 20 accepts the user ID and the password transmitted from the terminal apparatus 10B through the communication unit 201, verifies that the user ID and the password of the user are correct, and performs predetermined authentication. If the user ID and the password of the user are correct, the server 20 transmits information on authentication completion to the terminal apparatus 10B via the communication unit 201. The job offering information acceptance module 2034 of the server 20 transmits display data on the job offering information input screen for accepting the job offering information, to the terminal apparatus 10B through the communication unit 201.

In step S212, through operation by the user, the input operation acceptance unit 171 of the terminal apparatus 10B accepts input of the job offering information to be registered by the user, specifically, the job offering information that includes the company name and store name of the business operator, the name of job type and the name of work pertaining to the employment, the recruitment number, information on the unit wage for predetermined hours, and information indicating the range of registrants to which the job offering information is presented in a browsable manner. The transceiver unit 172 transmits the accepted job offering information to the server 20.

In step S222, the job offering information acceptance module 2034 of the server 20 accepts, via the communication unit 201, the job offering information transmitted from the terminal apparatus 10B.

In step S223, the job offering information presentation module 2035 of the server 20 determines whether presentation is only to the registrants (first registrants) belonging to the business operator, presentation is to the range also including the registrants (second registrants) belonging to the managing entity, or presentation is to the range also including the registrants (third registrants) not belonging to a specific business operator or managing entity, based on information indicating the range of registrants to which the job offering information accepted in step S222 is to be presented in a browsable manner. In the case of presentation only to the registrants (first registrants) belonging to the business operator, the job offering information presentation module 2035 determines whether presentation is performed only to the internal employees, or to the internal employees and also to the external experienced workers and the external workers. The job offering information presentation module 2035 controls the presentation range in accordance with the range of attributes of registrants based on the determination result, and transmits the job offering information (or information indicating that the job offering information has been updated) via the communication unit 201 to the terminal apparatus 10A concerning the corresponding registrants.

In step S233, the transceiver unit 172 of the terminal apparatus 10A accepts the job offering information (or the information indicating that the job offering information has been updated) transmitted from the server 20. The notification control unit 174 causes the display 150 to display the accepted job offering information.

In step S224, the job offering information acceptance module 2034 of the server 20 stores the job offering information accepted in step S222, in the job offering database 2022.

As described above, when the job opportunity registrant management system 1 accepts the job offering information from the user that is the business operator, the job opportunity registrant management system 1 presents the job offering information to the registrants in accordance with the attributes of the registrants to whom the job offering information is presented. Accordingly, the business operator can register the job offering information in accordance with the attributes of the registrants, and utilize human resources other than its own registrants as required while priority is given to its own registrants.

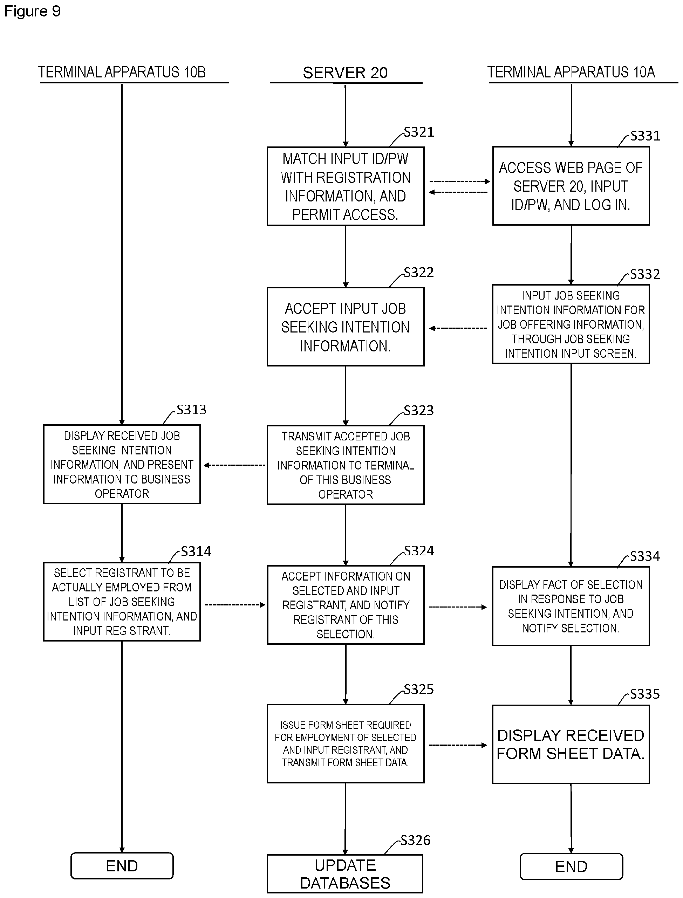

Figure 9 is a flowchart showing an example of a flow of performing the job seeking intention information acceptance process by the job opportunity registrant management system 1 in the embodiment 1.

In step S331, the input operation acceptance unit 171 of the terminal apparatus 10A accepts operation of inputting the user ID and the password for performing authentication required to use the service of the job opportunity registrant management system 1, from the user who is a registrant intending to transmit job seeking intention information. The transceiver unit 172 transmits the accepted user ID and password, and the user information to the server 20. The transceiver unit 172 of the terminal apparatus 10A accepts information on authentication completion transmitted from the server 20, and display data on a job seeking intention information input screen for accepting the job seeking intention information. The notification control unit 174 causes the display 150 to display the accepted information on authentication completion, and the job seeking intention information input screen.

In step S321, the server 20 accepts the user ID and the password transmitted from the terminal apparatus 10A through the communication unit 201, and verifies that the user ID and the password of the user are correct, thus performing predetermined authentication. If the user ID and the password of the user are correct, the server 20 transmits information on authentication completion to the terminal apparatus 10A via the communication unit 201. The job offering information acceptance module 2034 of the server 20 transmits display data on the job seeking intention information input screen for accepting the job seeking intention information, to the terminal apparatus 10A through the communication unit 201.

In step S332, the input operation acceptance unit 171 of the terminal apparatus 10A accepts input of the job seeking intention information registered by the user through operation from the user, specifically, the user ID identifying the registrant having an intention for employment, the company name and store name of the job-seeking-target business operator, the job-seeking-target job type name and work name, and the employment start date and time and the employment end date and time in the case where the job seeking intention information is job seeking intention information (shifts) assuming a short-term employment. The transceiver unit 172 transmits the accepted job seeking intention information to the server 20.

In step S322, the job seeking intention acceptance module 2036 of the server 20 accepts, via the communication unit 201, the job offering information transmitted from the terminal apparatus 10A.

In step S323, the job seeking intention selection module 2037 of the server 20 transmits, via the communication unit 201 to the terminal apparatus 10B, the job seeking intention information (or information indicating that the job seeking intention information has been updated) accepted in step S322 such that the information is displayed with discrimination among the registrants (first registrants) belonging to the business operator, the registrants (second registrants) belonging to the managing entity, and the registrants (third registrants) not belonging to a specific business operator or managing entity. Here, in the case of the registrants (first registrants), the registrants are discriminated as internal employees, external experienced workers, and external workers, and thus displayed.

In step S313, the transceiver unit 172 of the terminal apparatus 10B accepts the job seeking intention information (or the information indicating that the job seeking intention information has been updated) transmitted from the server 20. The notification control unit 174 causes the display 150 to display the accepted job offering information with discrimination with respect to the individual attributes of the registrants.

In step S314, through operation by the user, the input operation acceptance unit 171 of the terminal apparatus 10B accepts input of selection of the registrant to be actually employed by the business operator as the user in response to its own job offering. The transceiver unit 172 transmits the accepted information on the registrant to the server 20.

In step S324, the job seeking intention selection module 2037 of the server 20 accepts, via the communication unit 201, the information that has been transmitted from the terminal apparatus 10B and is on selection of the registrant to be actually employed in response to the job offering. The selection notification module 2038 of the server 20 transmits, via the communication unit 201 to the terminal apparatus 10A, notification about selection by the business operator, for the accepted and selected registrant pertaining to the job seeking intention information.

In step S334, the transceiver unit 172 of the terminal apparatus 10A accepts the notification about selection by the business operator transmitted from the server 20. The notification control unit 174 causes the display 150 to display the accepted notification about selection by the business operator.

In step S325, the selection notification module 2038 issues documents required for employment, e.g., a notice of employment, and an attendance record, to the selected registrant. The selection notification module 2038 transmits, via the communication unit 201 to the terminal apparatus 10A, form sheet data on the issued documents with respect to the selected job seeking intention information.

In step S335, the transceiver unit 172 of the terminal apparatus 10A accepts the form sheet data on the documents transmitted from the server 20. The notification control unit 174 causes the display 150 to display the accepted form sheet data on the documents.

In step S326, the job seeking intention acceptance module 2036 of the server 20 stores and holds the accepted job seeking intention information in the registrant database 2021. The job seeking intention selection module 2037 stores and holds status information on selection by the business operator, in the job offering database 2022. The selection notification module 2038 registers and stores information on the selection, in the registrant database 2021.

As described above, the job opportunity registrant management system 1 discriminates the accepted job seeking intention information with respect to the attributes of the registrants, presents the information to the business operator, and accepts selection by the business operator. When the business operator selects the registrant to be actually employed, the registrant is notified of the selection. Here, documents required for employment are issued with respect to the individual attributes of the registrants. Accordingly, the business operator can select the registrant to be actually employed in consideration of the attribute of the registrant.

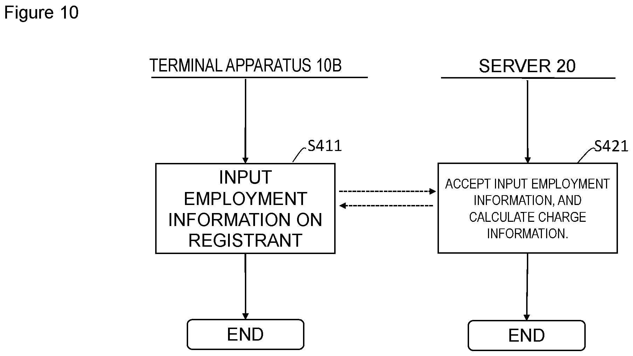

Figure 10 is a flowchart showing an example of a flow of performing the charge information calculation process by the job opportunity registrant management system 1 in the embodiment 1.

In step S411, through operation by the user that is the business operator, the input operation acceptance unit 171 of the terminal apparatus 10B accepts operation of inputting the employment information when the registrant is employed by this business operator. The transceiver unit 172 transmits the accepted employment information on the registrant to the server 20.

In step S421, the charge information generation module 2039 of the server 20 accepts, via the communication unit 201, the employment information on the registrant transmitted from the terminal apparatus 10B. The charge information generation module 2039 calculates charge information for payment of a predetermined fee that pertains to the accepted employment information on the registrant and also pertains to use of the job opportunity registrant management system 1. Here, the charge information is calculated with discrimination with respect to the attributes of the employed registrants.

As described above, after the registrant is actually employed, the job opportunity registrant management system 1 accepts the employment information on the registrant, and calculates the charge information for payment of the predetermined fee pertaining to the employment information on the registrant, with discrimination with respect to the individual attributes of the employed registrants. Accordingly, the charge information based on the attribute of the registrant can be easily calculated.

### <4 Screen Example>

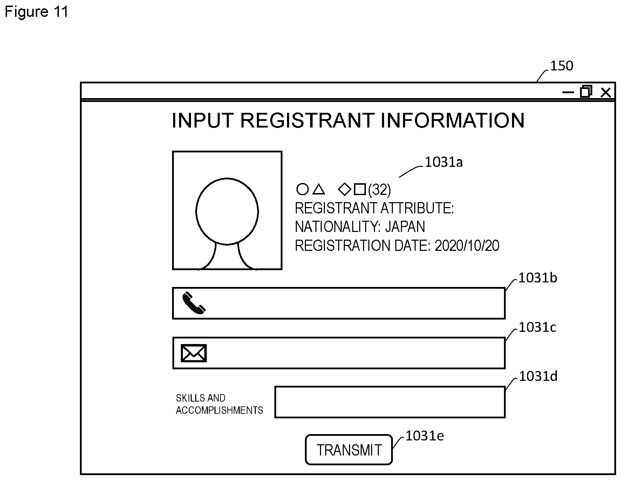

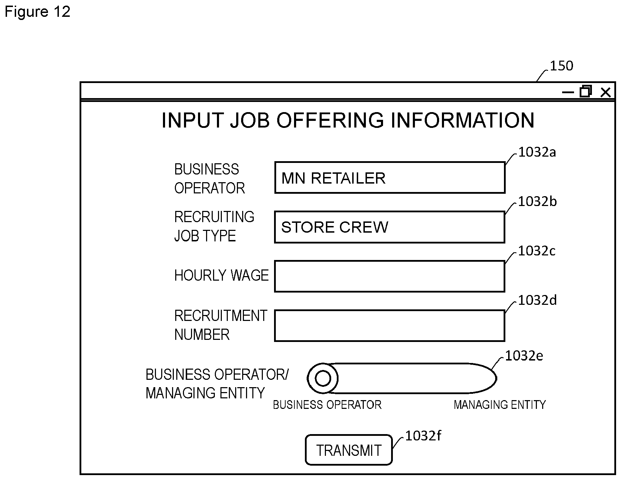

Hereinafter, referring to Figures 11 and 12, a screen example for displaying the registration information on the registrant, and a screen example for input of the job offering information according to the job opportunity registrant management system 1 are described.

Figure 11 shows the screen example for displaying the registration information on the registrant to be displayed on the terminal apparatus 10. The screen example in Figure 11 shows a screen example in a state where the registration information input screen is displayed for allowing input of the registration information by the user intending to register themself as a registrant for employment for the business operator. This corresponds to step S112 in Figure 7.

As shown in Figure 11, the registration information input screen is displayed on the display 150 of the terminal apparatus 10. On the registration information input screen there is displayed a personal information display field 1031a for a name and the like, as already input information on the registrant. Furthermore, on the registration information input screen there are provided a phone number input field 1031b for allowing input of a contact, an email address input field 1031c, and a skill information input field 1031d for prompting input of the skill information on the registrant, as input fields for prompting subsequent input. Furthermore, a transmission button 1031e is provided that is for transmitting input information to the server 20 after input into the phone number input field 1031b, the email address input field 1031c, and the skill information input field 1031d.

On the screen shown in Figure 11, it is configured so that the user intending to register themself as a registrant for employment for the business operator inputs their own registration information, and presses the transmission button 1031e, thus allowing themself to be registered as a registrant. Here, specifically, in a case of registration as a registrant (second registrant) belonging to the managing entity, input and registration of the skill information on the registrant themself facilitate selection of the registrant by the business operator after transmission of the job seeking intention. It is thus configured so that the skill information input field 1031d is provided to prompt input of the skill information.

Figure 12 shows the screen example for input of the job offering information to be displayed on the terminal apparatus 10. The screen example in Figure 12 shows a screen example in a state where the job offering information input screen is displayed for allowing input of the job offering information by the user that is the business operator intending to register the job offering information. This corresponds to step S212 in Figure 8.

As shown in Figure 12, the job offering information input screen is displayed on the display 150 of the terminal apparatus 10. On the job offering information input screen there are provided a business operator name input field 1032a for inputting the company name and store name of the business operator, a recruiting job type input field 1032b for inputting the name of job type and the name of work pertaining to the employment, a hourly wage input field 1032c for inputting an hourly wage that is a unit wage for predetermined hours, and a recruitment number input field 1032d for inputting the recruitment number for the employment, as input fields for prompting the business operator to input the job offering information. Furthermore, a presentation range setting field 1032e for setting the range of registrants to whom the job offering information is presented in a browsable manner, is provided. Moreover, a transmission button 1032f is provided that is for transmitting the input information to the server 20 after input into the business operator name input field 1032a, the recruiting job type input field 1032b, the hourly wage input field 1032c, the recruitment number input field 1032d, and the presentation range setting field 1032e.

On the screen shown in Figure 12, it is configured so that the user that is the business operator intending to register the job offering information inputs its own job offering information, and presses the transmission button 1032f, thus allowing the job offering information to be browsed by the registrant. Here, the presentation range setting field 1032e is thus provided to allow setting of the range where the job offering information is presented with respect to the individual attributes of the registrants to whom the job offering information is presented. The presentation range setting field 1032e shown in Figure 12 is configured to allow selection between presentation only to the registrants (first registrants) belonging to the business operator, or presentation also to the range of the registrants (second registrants) belonging to the managing entity. Alternatively, it may be configured to allow finer range setting as described above.

### <Brief Summary>

As described above, according to this embodiment, when the registration information is accepted from the users intending to register themselves as registrants for employment for the business operator, the attributes of the registrants are registered and stored, with attributes of the registrants being discriminated as different attributes. Specifically, the first registrant belonging to the business operator, the second registrant belonging to the managing entity, and the third registrant not belonging to a specific business operator or managing entity are discriminated from each other and stored. Through selection operation by the business operator, by setting the range corresponding to the attribute of the registrant, the job offering information is presented to the registrant concerned. Accordingly, the business operator can register the job offering information in accordance with the attributes of the registrants, and utilize human resources other than its own registrants as required, with priority being given to its own registrants. Accordingly, preliminary registration of the information on the workers employed by various business operators can securely keep the labor, and appropriately provide the labor for the business operators with labor shortage.

Upon acceptance of the job seeking intention information from the registrants, the accepted job seeking intention information is discriminated with respect to the attributes of the registrants and is presented to the business operator, and selection by the business operator is accepted. When the business operator selects the registrant to be actually employed, the registrant is notified of the selection. Here, documents required for employment are issued with respect to the individual attributes of the registrants. Accordingly, the business operator can select the registrant to be actually employed in consideration of the attribute of the registrant.

After the registrant is actually employed, the employment information on the registrant is accepted, and the charge information for payment of the predetermined fee pertaining to the employment information on the registrant is calculated, with discrimination with respect to the individual attributes of the registrants. Here, in the case where the second registrant belonging to the managing entity is employed, a predetermined fee for the managing entity may be calculated as charge refund information. Accordingly, the charge information based on the attribute of the registrant can be easily calculated.

### <Second Embodiment>

Hereinafter, another embodiment of a job opportunity registrant management system 1 is described.

### <1 Entire Configuration of Job Opportunity Registrant Management System 1>

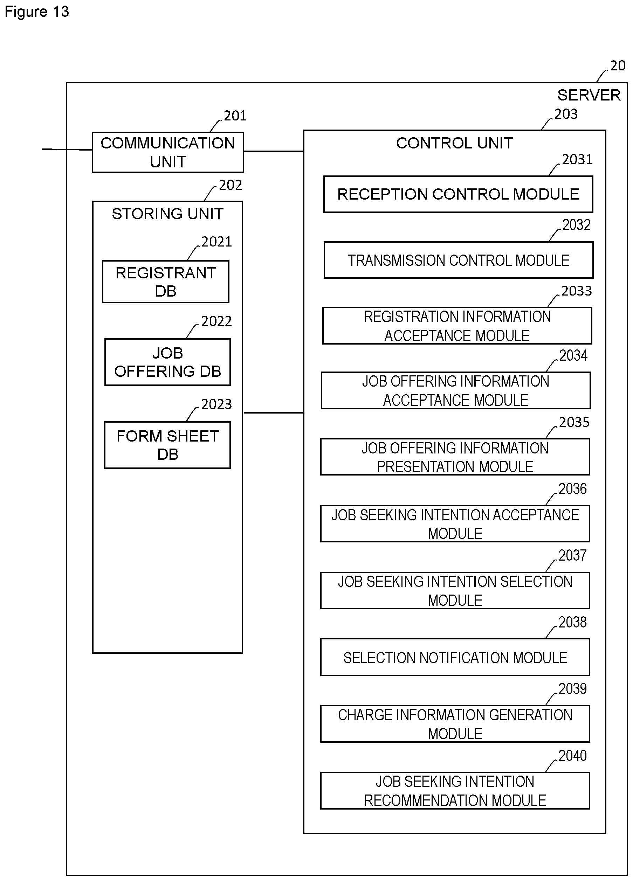

Figure 13 shows a functional configuration of a server 20 included in the job opportunity registrant management system 1 in an embodiment 2. Since an entire configuration of the job opportunity registrant management system 1 in the second embodiment, and configurations of a terminal apparatuses 10 are similar to those in the first embodiment, the description is not repeated. As shown in Figure 13, a configuration of the server 20 is similar to that in the first embodiment except that a function of a job seeking intention recommendation module 2040 is newly provided. Hereinafter, the function of the job seeking intention recommendation module 2040 in the second embodiment is described.

The job seeking intention recommendation module 2040 controls a process of recommending a registrant (second registrant) belonging to the managing entity among the registrants having not been selected by the business operator through the job seeking intention selection module 2037, as a candidate having a job seeking intention, to another business operator. The registrant (second registrant) belonging to the managing entity is the registrant 42 shown in Figure 1, and does not belong to a specific business operator as shown in Figure 1. Accordingly, the registrant 42 can be employed by another business operator. Consequently, even if the registrant is not selected by a certain business operator, presence of job offering information under a condition of a time slot or the like where the registrant belonging to the managing entity has transmitted the job seeking intention information allows the registrant belonging to the managing entity to be recommended to another business operator. For example, the job seeking intention recommendation module 2040 matches the condition of the job seeking intention information on the registrant with the condition of the job offering information on the other business operator. If the conditions match each other (not limited to exact match; a case where the condition partially matches is allowed), the registrant is recommended to the business operator.

### <2 Data Structure>

Since a data structure in the second embodiment is similar to that in the first embodiment, the description is not repeated.

### <3 Operation>

Since an operation in the second embodiment is similar to that in the first embodiment, the description is not repeated.

### <Brief Summary>

As described above, according to this embodiment, the second registrant belonging to the managing entity among the registrants having not been selected by the business operator to which the registrants have transmitted the job seeking intention information is recommended as a candidate having a job seeking intention to the other business operator. Accordingly, labor can be more appropriately provided for the business operator with labor shortage.

### <Third Embodiment>

Hereinafter, another embodiment of a job opportunity registrant management system 1 is described.

### <1 Entire Configuration of Job Opportunity Registrant Management System 1>

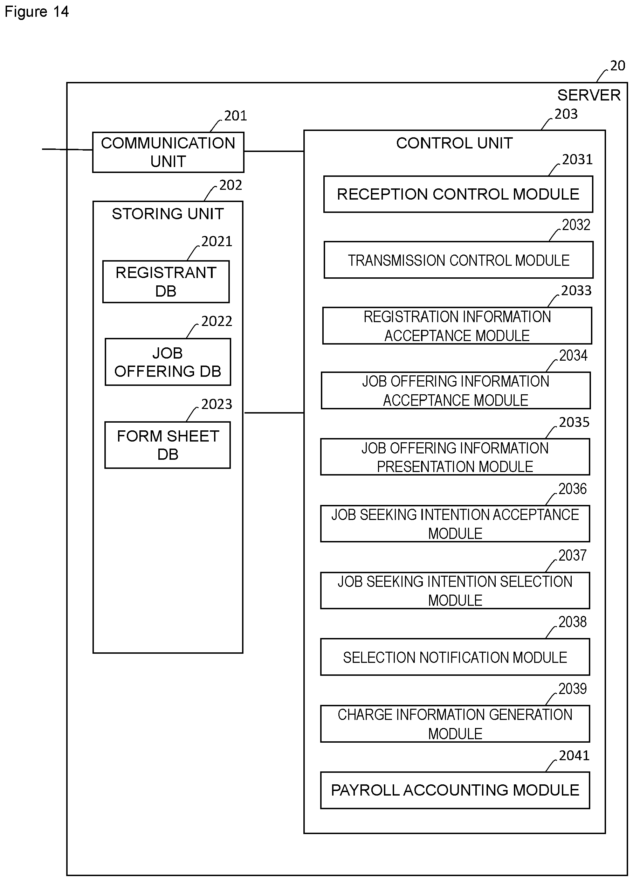

Figure 14 shows a functional configuration of a server 20 included in the job opportunity registrant management system 1 in an embodiment 3. Since an entire configuration of the job opportunity registrant management system 1 in the third embodiment, and configurations of a terminal apparatuses 10 are similar to those in the first embodiment, the description is not repeated. As shown in Figure 14, a configuration of the server 20 is similar to that in the first embodiment except that a function of a payroll accounting module 2041 is newly provided. Hereinafter, the function of the payroll accounting module 2041 in the third embodiment is described.

The payroll accounting module 2041 controls a process of performing payroll accounting pertaining to employment of the selected registrant accepted by the job seeking intention selection module 2037. For example, the payroll accounting module 2041 performs payroll calculation pertaining to the employment of the registrants with respect to the individual attributes of the registrants registered in the registrant database 2021 in a discriminated manner. This is because the various conditions on which the payroll calculation is based are different with respect to the attributes of the registrants. Here, the payroll accounting module 2041 may be configured so as to accept evaluation information on employment of the registrant from the business operator. For example, the evaluation information may be quantitative evaluation information, such as indication among five levels, or qualitative evaluation information, such as a comment.

### <2 Data Structure>

Since a data structure in the second embodiment is similar to that in the first embodiment, the description is not repeated.

### <3 Operation>

Since an operation in the second embodiment is similar to that in the first embodiment, the description is not repeated.

### <Brief Summary>

As described above, according to this embodiment, the payroll accounting pertaining to the employment of the registrant selected by the business operator is performed. Accordingly, labor can be more efficiently secured, and procedures after the registrant is employed can also be efficiently processed.

The embodiments related to the disclosure are thus described above. These can be implemented in other various embodiments. Various types of omission, replacement, and change can be performed and implementation can be made. These embodiments, modifications, and what is subjected to omission, replacement, and change are included in the technical scope of claims, and their equivalent range.

### <Supplement>

Items described in the above embodiments are supplementarily described below.

(Supplement 1) A program to be executed by a computer including a processor 29, and a memory 25, for managing registrants registered for employment for a business operator, wherein the memory 25 is configured to store attributes of the registrants so as to discriminate a first registrant belonging to the business operator, from a second registrant belonging to a managing entity having a predetermined relationship with the business operator (2021), and the program causes the processor 29 to execute: a step of accepting registration information from the registrants, and storing, in the memory, the information, with discrimination with respect to the attributes of the registrants (S122); a step of accepting job offering information from the business operator (S222); and a step of presenting, to the registrants, the job offering information corresponding to the attributes of the registrants, according to a selection operation from the business operator (S223).

(Supplement 2) The program according to (Supplement 1), wherein the step of storing, in the memory, the registration information from the registrant stores the registration information from the first registrant by the business operator, and stores the registration information from the second registrant by the managing entity.

(Supplement 3) The program according to (Supplement 1) or (Supplement 2), wherein the memory is further configured to store a third registrant not belonging to the business operator or the managing entity, with discrimination from the first registrant and the second registrant.

(Supplement 4) The program according to any of (Supplement 1) to (Supplement 3), wherein the program causes the processor to further execute: a step of accepting, from the registrants, job seeking intention information for the job offering information (S322); a step of presenting, to the business operator, the job seeking intention information from the registrants, with discrimination with respect to the attributes of the registrants (S323); a step of accepting, from the business operator, an input of selecting the registrant who is to be actually employed, from the presented job seeking intention information (S324); and a step of notifying the registrant selected by the business operator that the registrant has been selected by the business operator (S324).

(Supplement 5) The program according to (Supplement 4), wherein the program causes the processor to further execute a step of calculating charge information for the business operator pertaining to the employment concerning the job seeking intention information on the registrant, with discrimination with respect to the attribute of the registrant (S421).

(Supplement 6) The program according to (Supplement 5), wherein the step of calculating the charge information calculates predetermined charge refund information for the managing entity, about the charge information pertaining to employment of the second registrant.

(Supplement 7) The program according to any of (Supplement 4) to (Supplement 6), wherein the program causes the processor to further execute a step of recommending the job seeking intention information by the second registrant having not been selected by the business operator, to another business operator related to the managing entity having the predetermined relationship with the business operator concerned.

(Supplement 8) The program according to any of (Supplement 4) to (Supplement 7), wherein the program causes the processor to further execute a step of issuing a form sheet that corresponds to the attribute of the registrant and is required for employment, to the registrant selected by the business operator (S325).

(Supplement 9) The program according to any of (Supplement 4) to (Supplement 8), wherein the program causes the processor to further execute a step of performing payroll accounting for the registrant, based on attendance information pertaining to the employment, after the registrant selected by the business operator is actually employed.

(Supplement 10) The program according to any of (Supplement 4) to (Supplement 9), wherein the program causes the processor to further execute a step of accepting an input of evaluation information on employment of the registrant, after the registrant selected by the business operator is actually employed.

(Supplement 11) The program according to any of (Supplement 4) to (Supplement 10), wherein the memory is configured to store skill information on the second registrant, the step of storing, in the memory, the registration information from the registrant accepts the skill information on the second registrant, as the registration information, and stores the information in the memory, and the step of presenting the job offering information to the registrant accepts skill information required for employment pertaining to the job offering information from the business operator, and presents the information to the registrant.

(Supplement 12) The program according to any of (Supplement 3) to (Supplement 11), wherein the step of presenting the job offering information provides presentation to the business operator so as to provide presentation browsable only for the first registrant, presentation browsable only for the first registrant and the second registrant, or presentation browsable for the first registrant, the second registrant, and the third registrant, in a selectable manner, accepts a selection operation from the business operator, and presents, to the registrant, the job offering information corresponding to the attribute of the registrant according to the selection operation from the business operator.

(Supplement 13) The program according to (Supplement 12), wherein with respect to the first registrant, selectable presentation is provided as to whether an internal employee employed by the business operator, an external employee previously employed by the business operator, and an external worker not employed by the business operator currently or previously are discriminated from each other in a browsable manner.

(Supplement 14) An information processing apparatus, including a control unit 203, and a storing unit 202, and managing registrants registered for employment for a business operator, wherein the storing unit 202 is configured to store attributes of the registrants so as to discriminate a first registrant belonging to the business operator, from a second registrant belonging to a managing entity having a predetermined relationship with the business operator (2021), and the control unit 203 executes: a step of accepting registration information from the registrants, and storing, in a memory, the information, with discrimination with respect to the attributes of the registrants (S122); a step of accepting job offering information from the business operator (S222); and a step of presenting, to the registrants, the job offering information corresponding to the attributes of the registrants, according to a selection operation from the business operator (S223).

(Supplement 15) A method to be executed by a computer including a processor 29, and a memory 25, for managing registrants registered for employment for a business operator, wherein the memory 25 is configured to store attributes of the registrants so as to discriminate a first registrant belonging to the business operator, from a second registrant belonging to a managing entity having a predetermined relationship with the business operator (2021), and the method causes the processor 29 to execute: a step of accepting registration information from the registrants, and storing, in the memory, the information, with discrimination with respect to the attributes of the registrants (S122); a step of accepting job offering information from the business operator (S222); and a step of presenting, to the registrants, the job offering information corresponding to the attributes of the registrants, according to a selection operation from the business operator (S223).

### [REFERENCE SIGNS LIST]

10 terminal apparatus, 20 server, 80 network, 130 operation acceptance unit, 161 user information, 22 communication IF, 23 input and output IF, 25 memory, 26 storage, 29 processor, 201 communication unit, 202 storing unit, 2021 registrant database, 2022 job offering database, 2023 form sheet database, 203 control unit

## Claims

1. A program to be executed by a computer comprising a processor, and a memory, for managing registrants registered for employment for a business operator,
wherein the memory is configured to store attributes of the registrants so as to discriminate a first registrant belonging to the business operator, from a second registrant belonging to a managing entity having a predetermined relationship with the business operator, and
the program causes the processor to execute:
a step of accepting registration information from the registrants, and storing, in the memory, the information, with discrimination with respect to the attributes of the registrants;
a step of accepting job offering information from the business operator; and
a step of presenting, to the registrants, the job offering information corresponding to the attributes of the registrants, according to a selection operation from the business operator.

2. The program according to claim 1,
wherein the step of storing, in the memory, the registration information from the registrant
stores the registration information from the first registrant by the business operator, and
stores the registration information from the second registrant by the managing entity.

3. The program according to claim 1 or 2, wherein the memory is further configured to store a third registrant not belonging to the business operator or the managing entity, with discrimination from the first registrant and the second registrant.

4. The program according to any one of claims 1 to 3,
wherein the program causes the processor to further execute:
a step of accepting, from the registrants, job seeking intention information for the job offering information;
a step of presenting, to the business operator, the job seeking intention information from the registrants, with discrimination with respect to the attributes of the registrants;
a step of accepting, from the business operator, an input of selecting the registrant who is to be actually employed, from the presented job seeking intention information; and
a step of notifying the registrant selected by the business operator that the registrant has been selected by the business operator.

5. The program according to claim 4,
wherein the program causes the processor to further execute
a step of calculating charge information for the business operator pertaining to the employment concerning the job seeking intention information on the registrant, with discrimination with respect to the attribute of the registrant.

6. The program according to claim 5,
wherein the step of calculating the charge information
calculates predetermined charge refund information for the managing entity, about the charge information pertaining to employment of the second registrant.

7. The program according to any one of claims 4 to 6,
wherein the program causes the processor to further execute
a step of recommending the job seeking intention information by the second registrant having not been selected by the business operator, to another business operator related to the managing entity having the predetermined relationship with the business operator concerned.

8. The program according to any one of claims 4 to 7,
wherein the program causes the processor to further execute
a step of issuing a form sheet that corresponds to the attribute of the registrant and is required for employment, to the registrant selected by the business operator.

9. The program according to any one of claims 4 to 8,
wherein the program causes the processor to further execute
a step of performing payroll accounting for the registrant, based on attendance information pertaining to the employment, after the registrant selected by the business operator is actually employed.

10. The program according to any one of claims 4 to 9,
wherein the program causes the processor to further execute
a step of accepting an input of evaluation information on employment of the registrant, after the registrant selected by the business operator is actually employed.

11. The program according to any one of claims 4 to 10,
wherein the memory is configured to store skill information on the second registrant,
the step of storing, in the memory, the registration information from the registrant accepts the skill information on the second registrant, as the registration information, and stores the information in the memory, and
the step of presenting the job offering information to the registrant accepts skill information required for employment pertaining to the job offering information from the business operator, and presents the information to the registrant.

12. The program according to any one of claims 3 to 11, wherein the step of presenting the job offering information provides presentation to the business operator so as to provide presentation browsable only for the first registrant, presentation browsable only for the first registrant and the second registrant, or presentation browsable for the first registrant, the second registrant, and the third registrant, in a selectable manner, accepts a selection operation from the business operator, and presents, to the registrant, the job offering information corresponding to the attribute of the registrant according to the selection operation from the business operator.

13. The program according to claim 12, wherein with respect to the first registrant, selectable presentation is provided as to whether an internal employee employed by the business operator, an external employee previously employed by the business operator, and an external worker not employed by the business operator currently or previously are discriminated from each other in a browsable manner.

14. An information processing apparatus, comprising a control unit, and a storing unit, and managing registrants registered for employment for a business operator,
wherein the storing unit is configured to store attributes of the registrants so as to discriminate a first registrant belonging to the business operator, from a second registrant belonging to a managing entity having a predetermined relationship with the business operator, and
the control unit executes:
a step of accepting registration information from the registrants, and storing, in the memory, the information, with discrimination with respect to the attributes of the registrants;
a step of accepting job offering information from the business operator; and
a step of presenting, to the registrants, the job offering information corresponding to the attributes of the registrants, according to a selection operation from the business operator.

15. A method to be executed by a computer comprising a processor, and a memory, for managing registrants registered for employment for a business operator,
wherein the memory is configured to store attributes of the registrants so as to discriminate a first registrant belonging to the business operator, from a second registrant belonging to a managing entity having a predetermined relationship with the business operator, and
the method causes the processor to execute:
a step of accepting registration information from the registrants, and storing, in the memory, the information, with discrimination with respect to the attributes of the registrants;
a step of accepting job offering information from the business operator; and
a step of presenting, to the registrants, the job offering information corresponding to the attributes of the registrants, according to a selection operation from the business operator.
